**Europäisches Patentamt**

**European Patent Office**

**Office européen des brevets**

(11) Numéro de publication : **0 527 678 B1**

## (12) FASCICULE DE BREVET EUROPEEN

(45) Date de publication du fascicule du brevet :
25.10.95 Bulletin 95/43

(51) Int. Cl.⁶ : **G01F 1/74**

(21) Numéro de dépôt : **92402250.2**

(22) Date de dépôt : **07.08.92**

(54) **Procédé de mesure de débit de poudre fluidisée et dispositif de mesure de débit mettant en oeuvre un tel procédé.**

(30) Priorité : **12.08.91 FR 9110238**

(43) Date de publication de la demande :
**17.02.93 Bulletin 93/07**

(45) Mention de la délivrance du brevet :
**25.10.95 Bulletin 95/43**

(84) Etats contractants désignés :
**CH DE FR GB IT LI SE**

(56) Documents cités :
**EP-A- 0 072 105**
**EP-A- 0 216 574**
**DE-A- 2 925 510**
**GB-A- 2 105 854**

(73) Titulaire : **SAMES S.A.**
**Z.I.R.S.T.,**
**13 Chemin de Malacher**
**F-38240 Meylan (FR)**

(72) Inventeur : **Buquet, Thierry**
**16bis Boulevard Maréchal Joffre**
**F-38000 Grenoble (FR)**

(74) Mandataire : **CABINET BONNET-THIRION**
**95 Boulevard Beaumarchais**
**F-75003 Paris (FR)**

# Description

L'invention se rapporte à un procédé de mesure de débit de poudre fluidisée dans un circuit de circulation muni d'une zone d'entraînement du mélange air-poudre dans laquelle de l'air est injecté.

L'invention permet d'évaluer le débit massique de poudre à partir de mesures en des points choisis d'un dispositif d'entraînement dudit mélange définissant ladite zone d'entraînement. Elle permet aussi la régulation du débit, la signalisation d'un manque de poudre et la détermination de l'usure d'un élément essentiel du dispositif d'entraînement, faisant aussi partie des moyens de mesure du débit de poudre.

L'invention concerne également un dispositif de mesure de débit de poudre mettant en oeuvre le procédé indiqué ci-dessus.

Le brevet américain N° 4 480 947 décrit un dispositif de mesure de débit de poudre agencé entre un réservoir de poudre fluidisée et un dispositif de transport de poudre formant plus particulièrement une sorte de pompe à air comprimé dont la fonction est de communiquer au mélange air-poudre une énergie suffisante pour permettre son transport dans un conduit, vers un poste d'utilisation. Le principe de mesure retenu consiste à injecter de l'air à débit constant dans un élément de conduit de longueur et section prédéterminées et à mesurer la chute de pression aux bornes de cet élément de conduit. L'air injecté n'a pas d'autre rôle que de mettre en mouvement à une vitesse déterminée la poudre à travers l'orifice. Autrement dit, une perte de charge est créée uniquement pour mesurer le débit massique de poudre. Le fait de créer cette perte de charge perturbe le fonctionnement du dispositif de transport de poudre placé en aval. En outre, la précision de la mesure se dégrade avec le temps en raison de l'usure de l'élément de conduit dans lequel on provoque la perte de charge. Cette usure devient gênante au bout d'un certain temps de fonctionnement variable, dépendant des conditions d'utilisation. Le dispositif décrit ne comporte aucun moyen permettant d'évaluer cette usure. Enfin, le système connu est de construction très complexe car il nécessite une source d'air comprimé à débit contrôlé et tout un agencement spécifique destiné à créer et mesurer la perte de charge.

L'invention propose de mettre en oeuvre un autre type de mesure ne présentant pas les inconvénients mentionnés ci-dessus et n'utilisant qu'un nombre limité de capteurs, dans un agencement particulièrement simple.

Dans cet esprit, l'invention concerne essentiellement un procédé de mesure de débit de poudre entraînée dans un circuit de circulation d'un mélange air-poudre comportant une zone d'entraînement dudit mélange, dans laquelle l'air injecté communique une quantité de mouvement à de la poudre, caractérisé en ce que ladite zone d'entraînement étant définie par un ensemble connu en soi comprenant des moyens d'injection d'air comprimé et un étranglement, il consiste à mesurer la différence de pression de part et d'autre dudit étranglement, à mesurer le débit d'air injecté et à évaluer ledit débit de poudre en tant que fonction de ces deux variables.

Bien entendu, le débit de l'air injecté peut être déduit d'une mesure de pression en amont de l'injecteur.

Autrement dit, l'invention consiste à mesurer les paramètres de fonctionnement d'un appareil d'entraînement de la poudre classiquement utilisé dans de nombreuses installations où un mélange air-poudre est entraîné dans un circuit. Un tel appareil d'entraînement de la poudre est, par exemple, constitué par un étranglement appelé communément "Venturi" et par un injecteur d'air disposé axialement à l'entrée de cet étranglement et relié à une source d'air comprimé. L'air injecté a pour effet de communiquer sa quantité de mouvement à de la poudre. Les deux mesures effectuées, indiquées ci-dessus, reviennent à mesurer les quantités de mouvement de l'air et de la poudre avant le mélange et de l'air et de la poudre après le mélange opéré pendant le passage au travers de l'étranglement. Le débit massique de poudre est déduit de ces deux mesures. L'étranglement est un tube de faible diamètre, pour assurer le transport sur la longueur souhaitée de canalisation et de longueur suffisante (par exemple 5 à 15 fois le diamètre) pour obtenir un mélange homogène d'air et de poudre. Il est de préférence muni d'un divergent de sortie pour limiter la perte de charge. Il comporte également éventuellement un convergent d'entrée. C'est dans cet étranglement que se crée l'échange de quantité de mouvement entre l'air injecté à grande vitesse et la poudre qui doit être entraînée. Il est à noter que le débit massique de poudre est, dans un tel agencement, inversement proportionnel à la mesure de la différence de pression de part et d'autre de ladite zone d'entraînement. Au contraire, dans le système antérieur analysé ci-dessus, le débit massique de poudre est à peu près proportionnel à la perte de charge mesurée aux bornes de l'élément de conduit. La mesure peut apparaître relativement simple mais l'équipement est en fait très compliqué.

L'invention concerne également, de façon générale, un dispositif de mesure de débit de poudre dans un circuit où circule un mélange air-poudre où est définie une zone d'entraînement dudit mélange dans laquelle l'air injecté communique une quantité de mouvement à de la poudre, caractérisé en ce que ladite zone d'entraînement est définie par un ensemble connu en soi comprenant des moyens d'injection d'air comprimé et un étranglement, en ce qu'un moyen de mesure de pression différentielle est connecté de part et d'autre de cet étranglement, en ce qu'un moyen de mesure de débit d'air est couplé audit moyen d'injection d'air et en ce que des moyens de calcul sont connectés pour recevoir des signaux élaborés par lesdits moyens de mesure et sont agencés pour élaborer un signal d'information représentatif du débit massique de poudre.

Le moyen de mesure de débit d'air injecté peut être un capteur de pression branché en amont d'un injecteur d'air.

Ainsi, il suffit de deux capteurs pour obtenir les informations nécessaires à l'évaluation du débit massique de poudre dans le mélange air-poudre traversant la zone d'entraînement. Le moyen de mesure de pression est un capteur de pression différentiel connecté de part et d'autre de la zone d'entraînement, tandis que le moyen de mesure de débit d'air peut être un capteur de pression apte à délivrer un signal représentatif de la pression génératrice de l'air injecté. Les capteurs peuvent être de tous types connus, notamment des capteurs à jauges de contrainte ou piezzo-électriques.

L'invention sera mieux comprise et d'autres avantages de celle-ci apparaîtront plus clairement à la lumière de la description qui va suivre donnée uniquement à titre d'exemple et faite en référence aux dessins annexés dans lesquels:

- la figure 1 est un schéma de principe d'une installation de projection électrostatique de peinture en poudre thermofusible incorporant des moyens de mesure de débit massique de poudre conformes à l'invention;
- la figure 2 est un graphe illustrant les relations entre le débit de poudre et les variables mesurées dans le dispositif de mesure de débit de poudre intégré à l'installation de la figure 1.

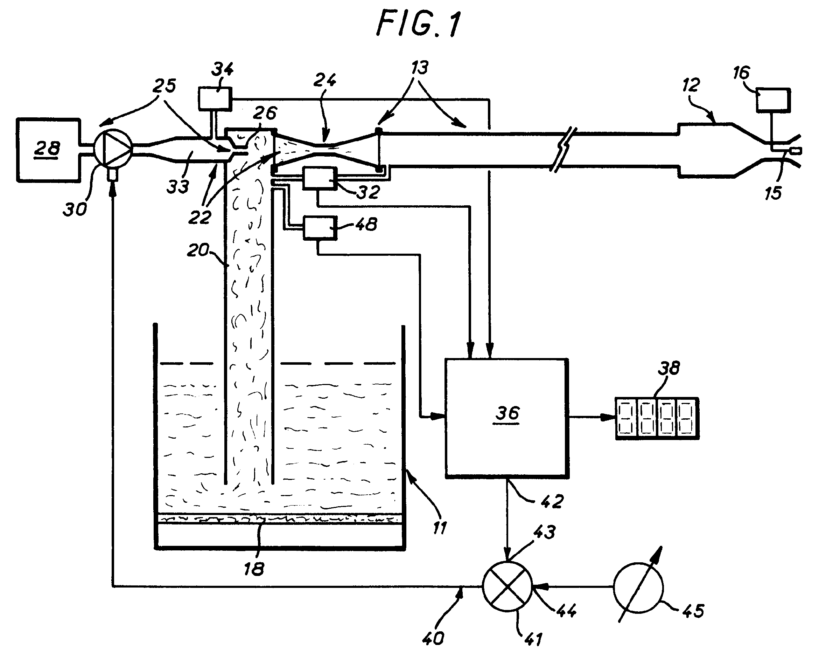

En se référant plus particulièrement à la figure 1, on a représenté très schématiquement une installation de projection électrostatique de peinture en poudre thermofusible, comprenant principalement un réservoir 11 renfermant la poudre, un projecteur 12 de ladite peinture en poudre et un circuit de distribution 13 d'un mélange air-poudre, établi entre la cuve 11 et le projecteur 12. Celui-ci comporte une électrode 15 reliée à une source de haute-tension 16. Le réservoir 11 est classiquement pourvu d'un double fond ayant une paroi poreuse 18, à travers laquelle on injecte de l'air pour que la poudre contenue dans le réservoir soit maintenue à l'état fluidisé. Le circuit 13 comporte un tube d'aspiration 20 s'étendant verticalement et plongeant dans la cuve. Un appareil d'entraînement de poudre 22, connu en soi, est inséré dans le circuit 13 au sommet du tube d'aspiration 20. Il comprend ici un étranglement 24 appelé communément "Venturi" et des moyens d'injection d'air 25 agencés pour injecter axialement dans l'étranglement 24 (dans le sens de propagation souhaité du mélange air-poudre) un jet d'air à grande vitesse. Ces moyens d'injection comprennent une buse d'injection 26 dirigée axialement par rapport à l'étranglement et une source d'air comprimé 28 alimentant ledit injecteur à travers une vanne commandée 30. Cet agencement crée une zone d'entraînement qui s'étend ici sensiblement du sommet du conduit 20 à la sortie de l'étranglement 24. Avantageusement, l'étranglement 24 est un élément démontable dans le circuit 13 et peut être aisément remplacé.

Le dispositif de mesure de débit est équipé d'au moins deux moyens de mesure de pression 32, 34. Un premier moyen de mesure de pression est constitué ici d'un capteur de pression différentiel 32 connecté de part et d'autre de la zone d'entraînement, pour mesurer directement la différence de pression Δp entre l'entrée et la sortie de celle-ci. Un second moyen de mesure de pression est constitué d'un capteur de pression 34 relatif à la pression atmosphérique couplé au moyen d'injection d'air 25, en amont de la buse d'injection 26. Autrement dit, il est raccordé à un élément de conduit 33 reliant la source d'air comprimé à la buse 26. Dans cet élément de conduit 33, la section d'écoulement est très grande vis-à-vis de celle de la buse d'injection 26. On peut considérer que la vitesse d'écoulement de l'air au point de raccordement du capteur 34 est quasi nulle. Le capteur 34 délivre donc un signal représentatif de la pression génératrice de l'air expulsé par la buse 26. Par ailleurs, les variations de pression atmosphérique peuvent être négligées (voire corrigées) de sorte qu'on peut considérer que le capteur 34 délivre un signal représentatif de la pression génératrice absolue de l'air d'entraînement. Soit Pi cette pression.

On a trouvé que le débit massique de poudre Dp traversant la zone d'entraînement (donc le débit de poudre dans le circuit 13 pouvait être déduit des mesures de Δp et Pi, respectivement délivrées par les deux capteurs 32 et 34.

Plus précisément, on a trouvé que ce débit Dp pouvait être déterminé avec une précision suffisante par la relation suivante:

$$Dp = \frac{K_1[K_2Pi - Pat]^2}{Pi[\Delta p + \Delta h]} - K_3Pi$$

où $K_1$ et $K_2$ et $K_3$ sont des constantes positives et Pat représente la pression atmosphérique qui est considérée comme constante dans le terme où elle intervient. $\Delta h$ est la perte de charge dans l'étranglement et il a été constaté que celle-ci ne dépendait pratiquement que de la pression Pi. Comme mentionné précédemment, cette pression est elle-même représentative du débit d'air injecté.

Par conséquent, on voit que le débit massique de poudre peut être aisément déterminé à partir d'un calculateur recevant, en tant que données d'entrée des signaux élaborés à partir de ces deux capteurs 32 et 34. Dans l'installation de la figure 1, on a prévu un tel calculateur 36 programmé pour recalculer en permanence le débit de poudre à partir des signaux délivrés par les capteurs 32 et 34. Ce calculateur pilote un moyen d'affichage 38 sur lequel on peut lire la valeur instantanée du débit. Le calculateur 36 fait également partie d'une boucle de régulation du débit de poudre 40, agissant sur une entrée de commande de la vanne 30. Cette dernière est une vanne proportionnelle dont l'entrée de commande est reliée à la sortie d'un comparateur 41. Le calculateur 36 comporte une sortie de données 42 délivrant un signal représentatif du débit massique de poudre et utilisé en tant que signal d'erreur appliqué à une entrée 43 du comparateur 41. L'autre entrée 44 du comparateur 41 est reliée à la sortie d'un générateur de consigne 45 permettant d'ajuster le débit de poudre à la valeur choisie.

Enfin, l'installation est complétée par un autre capteur de pression relatif 48 connecté en amont de l'étranglement 24, c'est-à-dire plus précisément à la partie supérieure du tube d'aspiration 20. Ce capteur est donc adapté à mesurer la pression qui règne à cet emplacement et qui varie de façon significative lorsque le réservoir 11 ne contient plus de poudre. Le calculateur 36 est donc programmé pour détecter une telle variation de pression, ce qui permet de déclencher un système d'alarme ou d'arrêter la projection.

Il résulte de la description qui précède que l'installation qui est décrite à la figure 1 permet non seulement de contrôler en permanence le débit de poudre grâce au moyen d'affichage 38 mais aussi de maintenir ce débit à une valeur constante prédéterminée puisque la vanne 30 est pilotée par un signal de régulation élaboré à partir des signaux délivrés par les capteurs 32 et 34.

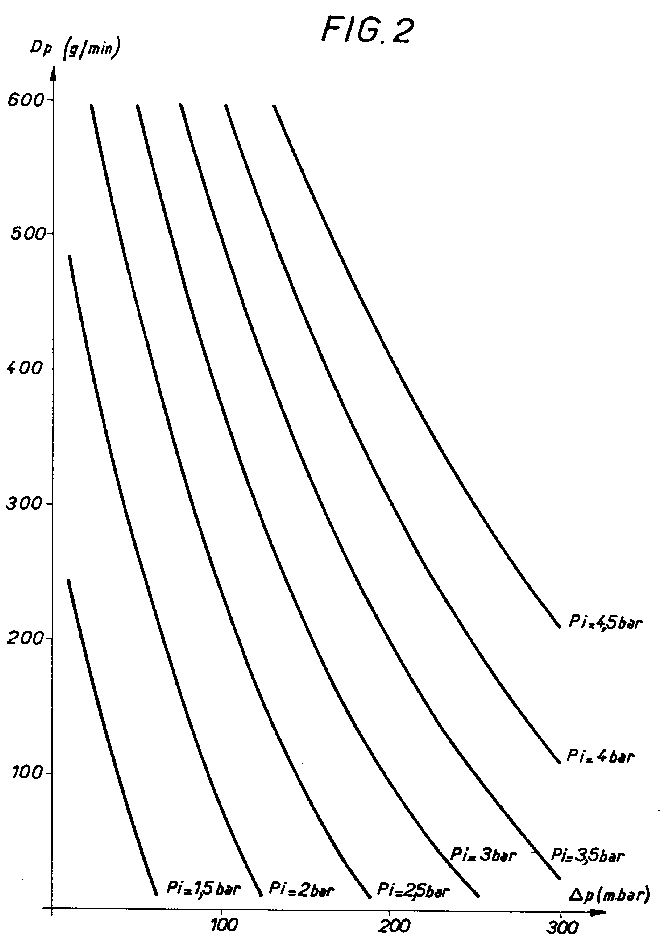

La figure 2 est un graphe d'étalonnage dans lequel on a représenté en ordonnée le débit de poudre Dp (en grammes par minute) et en abscisse la différence de pression $\Delta$p en millibar. Ce graphe d'étalonnage comporte une famille de courbes correspondant chacune à une pression d'injection Pi prédéterminée, deux courbes voisines correspondant à une variation de Pi de 0,5 bar. La "programmation" de ce graphe d'étalonnage dans le calculateur 36 est à la portée de l'homme du métier.

Selon une autre caractéristique avantageuse de l'invention, le calculateur 36 est également programmé pour intégrer par rapport au temps, pendant toute période de fonctionnement de l'installation, au moins les deux valeurs mesurées par les capteurs 32 et 34 où bien l'une de ces valeurs et la valeur calculée du débit de poudre et pour en déduire une information représentative de l'usure dudit étranglement 24, en tant que fonction de ces deux valeurs intégrées. En effet, on a trouvé que l'usure de l'étranglement 24 est fonction de l'énergie cinétique du mélange air-poudre le traversant. Or, la masse volumique du mélange air-poudre est fonction du débit massique de poudre et du débit d'air tandis que la vitesse du mélange air-poudre est fonction du débit d'air d'entraînement. Par conséquent, l'usure est fonction du débit de poudre et du débit d'air. Le débit d'air est déduit de la mesure du paramètre Pi délivré par le capteur 34. Le débit de poudre est quant à lui une fonction de ce même paramètre Pi et de la différence de pression $\Delta$p mesurée par le capteur 32.

## Revendications

1. Procédé de mesure de débit de poudre entraînée dans un circuit de circulation d'un mélange air-poudre comportant une zone d'entraînement dudit mélange, dans laquelle l'air injecté communique une quantité de mouvement à de la poudre, caractérisé en ce que ladite zone d'entraînement étant définie par un ensemble (22) comprenant des moyens d'injection d'air comprimé et un étranglement, il consiste à mesurer la différence de pression (32) de part et d'autre de cet étranglement, à mesurer le débit d'air injecté (34) et à évaluer ledit débit de poudre en tant que fonction de ces deux variables.

2. Procédé de mesure selon la revendication 1, caractérisé en ce que, ledit appareil d'entraînement comprenant un étranglement avec lequel coopèrent lesdits moyens d'injection d'air, il consiste en outre à évaluer l'usure dudit étranglement en intégrant par rapport au temps, au moins deux paramètres mesurés ou déduits, représentatifs du débit dudit mélange air-poudre et du débit d'air d'entraînement.

3. Procédé selon la revendication 2, caractérisé en ce que ces paramètres sont d'une part le débit d'air d'entraînement ou une pression génératrice de l'air d'entraînement et, d'autre part, la différence de pression entre l'entrée et la sortie de ladite zone d'entraînement ou le débit de poudre.

4. Procédé selon la revendication 2, caractérisé en ce que ces paramètres sont le débit de poudre et la différence de pression entre l'entrée et la sortie de ladite zone d'entraînement.

5. Dispositif de mesure de débit de poudre dans un circuit où circule un mélange air-poudre où est définie une zone d'entraînement dudit mélange dans laquelle l'air injecté communique une quantité de mouvement à de la poudre, caractérisé en ce que ladite zone d'entraînement est définie par un ensemble comprenant des moyens d'injection d'air comprimé (25) et un étranglement (24) et en ce qu'un moyen de mesure de pression différentielle (32) est connecté de part et d'autre de cet étranglement, en ce qu'un moyen de mesure de débit d'air (34) est couplé audit moyen d'injection d'air et en ce que des moyens de calcul (36) sont connectés pour recevoir des signaux élaborés par lesdits moyens de mesure et sont agencés pour élaborer un signal d'information représentatif du débit massique de poudre.

6. Dispositif de mesure de débit selon la revendication 5, caractérisé en ce que ledit moyen de mesure de débit d'air est un capteur de pression (34) apte à délivrer un signal représentatif de la pression génératrice de l'air injecté.

7. Dispositif de mesure de débit selon la revendication 6, caractérisé en ce que ledit appareil d'entraînement de poudre, connu en soi, est constitué dudit étranglement (24) et desdits moyens d'injection d'air agencés pour injecter l'air axialement dans ledit étranglement.

8. Dispositif selon la revendication 7, caractérisé en ce que ledit appareil d'entraînement de poudre est placé à l'extrémité supérieure d'un conduit (20) plongeant dans un réservoir de poudre fluidisée.

9. Dispositif selon l'une des revendications 5 à 8, caractérisé en ce qu'une vanne de réglage commandée (30) est prévue dans lesdits moyens d'injection d'air d'entraînement pour la régulation du débit de poudre, ladite vanne étant pilotée par un signal de régulation élaboré notamment à partir des signaux délivrés par lesdits moyens de mesure.

10. Dispositif selon l'une des revendications 5 à 9, caractérisé en ce qu'il comprend en outre un capteur de pression (48) connecté en amont de ladite zone d'entraînement pour délivrer un signal représentatif de la présence de poudre dans ledit circuit.

11. Dispositif selon l'une des revendications 5 à 10, caractérisé en ce que lesdits moyens de calcul sont programmés pour recalculer en permanence le débit de poudre à partir des signaux délivrés par ledit moyen de mesure de pression (32) et ledit moyen de mesure de débit d'air (34).

12. Dispositif selon l'une des revendications 5 à 10, caractérisé en ce que lesdits moyens de calcul sont programmés pour intégrer par rapport au temps les deux valeurs mesurées ou bien l'une de ces valeurs et la valeur calculée de débit de poudre et délivrer une information représentative de l'usure dudit étranglement en tant que fonction de ces deux valeurs intégrées.

**Patentansprüche**

1. Verfahren zur Durcflußmessung von Pulver, das in einem Kreis zur Förderung eines Luft-Pulver-Gemisches gefördert wird, mit einem Antriebsbereich für das Gemisch, in welchem die eingeblasene Luft dem Pulver einen Impuls zuführt, dadurch gekennzeichnet, daß der Antriebsbereich durch eine Einheit (22) gebildet wird, welche eine Druckluft-Einblaseinrichtung und eine Verengung aufweist, und daß die Druckdifferenz (32) auf beiden Seiten dieser Verengung gemessen, der Durchfluß eingeblasener Luft (34) gemessen und der Pulverdurchfluß als Funktion dieser beiden Variablen ermittelt wird.

2. Meßverfahren nach Anspruch 1, dadurch gekennzeichnet, daß das Antriebsgerät eine Verengung aufweist, mit der die Lufteinblas-Einrichtung zusammenwirkt und daß die Abnutzung der Verengung ermittelt wird, indem man mindestens zwei gemessene oder abgeleitete Parameter, die für den Durchfluß des Luft-Pulver-Gemisches und den Durchfluß der Förderluft repräsentativ sind, über die Zeit integriert.

3. Verfahren nach Anspruch 2, dadurch gekennzeichnet, daß die Parameter einerseits der Förderluft-Durchfluß oder ein diesen erzeugender Druck und andererseits die Druckdifferenz zwischen dem Einlaß und dem Auslaß des Antriebsbereiches oder der Pulver-Durchfluß sind.

4. Verfahren nach Anspruch 2, dadurch gekennzeichnet, daß die Parameter der Pulver-Durchfluß und die Druckdifferenz zwischen dem Einlaß und dem Auslaß des Antriebsbereiches sind.

5. Vorrichtung zur Durchflußmessung von Pulver in einem Kreis, in welchem ein Luft-Pulver-Gemisch gefördert wird, bei dem ein Antriebsbereich für das Gemisch, in welchem die eingeblasene Luft dem Pulver einen Impuls zuführt, festgelegt ist, dadurch gekennzeichnet, daß der Antriebsbereich von einer Einheit gebildet wird, welche eine Druckluft-Einblaseinrichtung (25) und eine Verengung (24) aufweist, und daß beiderseits der Verengung eine Differenzdruck-Meßeinrichtung (32) angeschlossen ist, daß eine Luftdurcfluß-Meßeinrichtung (34) mit der Lufteinblas-Einrichtung verbunden ist, und daß eine Berechnungseinrichtung (36) angeschlossen ist, die die von den Meßeinrichtungen gewonnenen Signale erhält, und ein für den Pulver-Massendurchfluß repräsentatives Informationssignal ermittelt.

6. Vorrichtung zur Durchflußmessung nach Anspruch 5, dadurch gekennzeichnet, daß die Luftdurchfluß-Meßeinrichtung ein Drucksensor (34) ist, der ein für den Druck zur Erzeugung der Einblaslüft repräsentatives Signal liefern kann.

7. Vorrichtung zur Durchflußmessung nach Anspruch 6, dadurch gekennzeichnet, daß das an sich bekannte Antriebsgerät für das Pulver aus der Verengung (24) und der Lufteinblas-Einrichtung, die zum axialen Einblasen der Luft in die Verengung ausgelegt ist, besteht.

8. Vorrichtung nach Anspruch 7, dadurch gekennzeichnet, daß das Antriebsgerät für das Pulver sich an dem oberen Ende einer Leitung (20) befindet, die in einen Behälter fluidisierten Pulvers taucht.

9. Vorrichtung nach einem der Ansprüche 5 bis 8, dadurch gekennzeichnet, daß ein gesteuertes Einstellventil (30) in der Förderluft-Einblaseinrichtung zur Regelung des Pulverdurchflusses vorgesehen ist, wobei das Ventil mittels eines Regelsignals angesteuert wird, das insbesondere aus Signalen gewonnen wird, die von den Meßeinrichtungen geliefert werden.

10. Vorrichtung nach einem der Ansprüche 5 bis 9, dadurch gekennzeichnet, daß sie außerdem einen Drucksensor (48) aufweist, der stromauf von dem Antriebsbereich angeschlossen ist, um ein Signal abzugeben, das für das Vorhandensein von Pulver in dem Kreis repräsentativ ist.

11. Vorrichtung nach einem der Ansprüche 5 bis 10, dadurch gekennzeichnet, daß die Berechnungseinrichtung entsprechend programmiert ist, um den Pulverdurchfluß ständig erneut aus den Signalen zu berechnen, die von der Druck-Meßeinrichtung (32) und der Luftdurchfluß-Meßeinrichtung (34) abgegeben werden.

12. Vorrichtung nach einem der Ansprüche 5 bis 10, dadurch gekennzeichnet, daß die Berechnungseinrichtung entsprechend programmiert ist, um entweder die beiden gemessenen Werte oder aber einen dieser Werte und den berechneten Wert des Pulverdurchflusses über die Zeit zu integrieren, und um eine Information, die für die Abnutzung der Verengung repräsentativ ist, als Funktion dieser beiden integrierten Werte zu liefern.

**Claims**

1. A method of measuring the flow rate of powder which is entrained in a circuit for the circulation of an air-powder mixture comprising a zone for entrainment of said mixture, in which zone the injected air communicates a momentum to some powder characterised in that said entrainment zone being defined by an assembly (22) comprising compressed air injection means and a constriction, the method comprises measuring the pressure difference (32) on respective sides of said constriction, measuring the injected air flow rate (34) and evaluating said powder flow rate as a function of those two variables.

2. A measuring method according to claim 1 characterised in that said entrainment device comprising a constriction with which said air injection means co-operate, the method further comprises evaluating the degree of wear of said constriction by integrating with respect to time at least two measured or deduced parameters which are representative of the flow rate of said air-powder mixture and the entrainment air flow rate.

3. A method according to claim 2 characterised in that said parameters are on the one hand the entrainment air flow rate or a pressure generating the entrainment air and on the other hand the pressure difference between the inlet and the outlet of said entrainment zone or the powder flow rate.

4. A method according to claim 2 characterised in that said parameters are the powder flow rate and the pressure difference between the inlet and the outlet of said entrainment zone.

5. Apparatus for measuring the flow rate of powder in a circuit in which an air-powder mixture circulates and in which there is defined a zone for entrainment of said mixture, in which zone the injected air communicates a momentum to some powder characterised in that said entrainment zone is defined by an assembly comprising compressed air injection means (25) and a constriction (24) and that a differential pressure measuring means (32) is connected on respective sides of said constriction, that an air flow rate measuring means (34) is coupled to said air injection means, and that calculating means (36) are connected to receive signals produced by said measuring means and are arranged to produce an information signal which is representative of the powder mass flow rate.

6. A flow rate measuring apparatus according to claim 5 characterised in that said air flow rate measuring means is a pressure sensor (34) capable of delivering a signal which is representative of the pressure generating the injected air.

7. A flow rate measuring apparatus according to claim 6 characterised in that said powder entrainment device which is known per se is formed by said constriction (24) and said air injection means which are arranged to inject the air axially into said constriction.

8.  Apparatus according to claim 7 characterised in that said powder entrainment device is disposed at the upper end of a conduit (20) which extends downwardly into a fluidised powder reservoir.

9.  Apparatus according to one of claims 5 to 8 characterised in that a controlled regulating valve (30) is provided in said entrainment air injection means for regulation of the powder flow rate, said valve being pilot-controlled by a regulation signal produced in particular from the signals delivered by said measuring means.

10. Apparatus according to one of claims 5 to 9 characterised in that it further comprises a pressure pick-up (48) connected upstream of said entrainment zone to deliver a signal which is representative of the presence of powder in said circuit.

11. Apparatus according to one of claims 5 to 10 characterised in that said calculating means are programmed to re-calculate continuously the powder flow rate from the signals delivered by said pressure measuring means (32) and said air flow rate measuring means (34).

12. Apparatus according to one of claims 5 to 10 characterised in that said calculating means are programmed to integrate with respect to time the two measured values or one of said values and the calculated powder flow rate value and to deliver an item of information which is representative of the degree of wear of said constriction as a function of those two integrated values.

FIG.1

# FIG.2